# EUROPEAN PATENT SPECIFICATION

(11) **EP 4 377 585 B1**
(45) Date of publication and mention of the grant of the patent: **19.02.2025**
(21) Application number: 22755180.1
(22) Date of filing: 26.07.2022
(51) Int. Cl.: F16F 9/06

(54) **DAMPING SYSTEM COMPRISING A FLUID DAMPER AND A FLUID RESERVOIR**
DÄMPFUNGSSYSTEM MIT EINEM FLUIDDÄMPFER UND EINEM FLUIDRESERVOIR
SYSTÈME D'AMORTISSEMENT COMPRENANT UN AMORTISSEUR À FLUIDE ET UN RÉSERVOIR À FLUIDE

(30) Priority: 29.07.2021 US 202163227172 P
(43) Date of publication of application: 05.06.2024
(73) Proprietor: STABILUS GmbH, 56070 Koblenz (DE)
(72) Inventor: LÖHKEN, Lars, 53545 Linz (DE); PIROTH, Raphael, 56077 Koblenz (DE); MÜLLER, Markus, 56072 Koblenz (DE); PROBST, Ulrich, 56204 Hillscheid (DE); UNKELBACH, Nico, 56584 Rüscheid (DE)
(74) Representative: Bernsmann, Falk
(86) International application number: PCT/EP2022/070922
(87) International publication number: WO 2023/006734

(56) References cited:
- DE-A1- 3 141 295
- US-A- 4 909 488
- US-A1- 2018 162 188
- US-B2- 6 663 089

## Description

### Technical Field

The invention relates to a damping system comprising at least one fluid damper comprising a damping volume containing a damping fluid, and a fluid reservoir comprising a reservoir piston partitioning an inner volume of the fluid reservoir into a damping chamber containing the damping fluid and a recoil chamber containing a recoil fluid. The damping volume of the at least one fluid damper is connected to the damping chamber of the fluid reservoir in a fluid-conducting manner. The reservoir piston is movable in a compression direction increasing a volume of the damping chamber and decreasing a volume of the recoil chamber. The reservoir piston is movable in a dilatation direction decreasing the volume of the damping chamber and increasing the volume of the recoil chamber.

### Background Art

The documents US 2016/0076617 A1, US 2019/0154100 A1, and US 2020/0114719 A1 show damping systems comprising a fluid damper and a fluid reservoir. These damping systems are used, for example, as vehicle suspension dampers. Major drawbacks of the known damping systems are their important size, mass, and costs.

Document US 6 663 089 B2 discloses a relevant damping system, comprising a first fluid damper comprising a damping volume containing a damping fluid, and one single fluid reservoir comprising a reservoir piston partitioning an inner volume of the one single fluid reservoir into a damping chamber containing the damping fluid and a recoil chamber containing a recoil fluid, and wherein the reservoir piston is movable in a compression direction increasing a volume of the damping chamber and decreasing a volume of the recoil chamber, and wherein the reservoir piston is movable in a dilatation direction decreasing the volume of the damping chamber and increasing the volume of the recoil chamber, and wherein the reservoir piston comprises a damping chamber surface facing the damping chamber and a recoil chamber surface facing the recoil chamber, and wherein a surface area of the damping chamber surface is smaller than a surface area of the recoil chamber surface.

### Technical Problem

The problem underlying the present invention is to provide a damping system that is smaller, more lightweight, and cheaper than existing systems.

### Solution to Problem

The problem is solved by a damping system according to claim 1. Advantageous embodiments are subject of the dependent claims.

The damping system comprises at least one fluid damper comprising a damping volume containing a damping fluid. The damping fluid is preferably a liquid, in particular a hydraulic oil. The damping volume preferably is completely filled with the damping fluid.

The damping system comprises a fluid reservoir comprising a reservoir piston partitioning an inner volume of the fluid reservoir into a damping chamber containing the damping fluid and a recoil chamber containing a recoil fluid. The recoil fluid is preferably a gas, in particular air. The recoil chamber preferably is completely filled with the recoil fluid. The partitioning preferably is designed in a fluid tight manner.

The damping volume of the at least one fluid damper is connected to the damping chamber of the fluid reservoir in a fluid-conducting manner. For example, the fluid reservoir may be attached directly to the at least one damper allowing for a direct connection of the damping volume of the at least one fluid damper to the damping chamber of the fluid reservoir.

The reservoir piston is movable in a compression direction increasing a volume of the damping chamber and decreasing a volume of the recoil chamber. If the recoil chamber is filled with a compressible recoil fluid, the recoil fluid is compressed when the reservoir piston moves in the compression direction. Consequently, the pressure of the compressed recoil fluid forces the reservoir piston in the dilatation direction pushing the damping fluid from the damping chamber of the fluid reservoir into the damping volume of the at least one fluid damper. Therefore, the fluid reservoir acts as a gas spring in series with the at least one fluid damper.

The reservoir piston is movable in a dilatation direction decreasing the volume of the damping chamber and increasing the volume of the recoil chamber. If the recoil chamber is filled with a compressible recoil fluid, the recoil fluid is dilated when the reservoir piston moves in the dilatation direction.

The compression direction and the dilatation direction preferably are oriented opposing each other along a linear longitudinal axis of the fluid reservoir, and the reservoir piston is linearly movable along the longitudinal axis. In alternative embodiments, the reservoir piston is movable by rotation around a rotational axis or by elastic deformation of the reservoir piston.

The reservoir piston of the fluid reservoir preferably comprises a damping chamber surface facing the damping chamber and a recoil chamber surface facing the recoil chamber. A surface area of the damping chamber surface is preferably smaller than a surface area of the recoil chamber surface. For example, the damping chamber surface and the recoil chamber surface of the reservoir piston may be disc-shaped, wherein the damping chamber surface has a smaller diameter than the recoil chamber surface.

Due to the different surface areas, the reservoir piston may act as a pressure transmission transforming a small pressure of the recoil fluid acting on the recoil chamber surface into a higher pressure of the reservoir piston acting via the damping chamber surface on the damping fluid. Consequently, a lower pressure of the recoil fluid may be used for a given application of the damping system. A decreased pressure of the recoil fluid relaxes the requirements concerning mechanical stability and fluid tightness of the fluid reservoir allowing for a more compact, more lightweight, and cheaper design of the fluid reservoir.

### Description of Embodiments

The damping system preferably comprises a fluid conduit connecting the damping volume of the at least one fluid damper to the damping chamber of the fluid reservoir in a fluid-conducting manner. Due to the conduit, the fluid reservoir may be arranged spaced apart from the at least one fluid damper allowing for a more efficient use of a space available for installation of the damping system. At least a section of the conduit, in particular the entire conduit, is preferably flexible. The conduit may comprise, for example, a hose. If the conduit is flexible, the damping system may be arranged more easily in a restricted space.

The damping system preferably comprises a pump connected in a fluid conducting matter to the recoil chamber of the fluid reservoir for adjusting a pressure of the recoil fluid in the recoil chamber. The pump may be operated manually, for example. The pump is preferably motorised, more preferably computer controlled. By adjusting the pressure of the recoil fluid, the elastic recoil force of the damping system may be adapted to evolving requirements during operation of the damping system.

The reservoir piston preferably comprises a reservoir piston rod extending into the damping chamber of the fluid reservoir. For example, the reservoir piston may be formed as a disc with the reservoir piston rod attached to the centre of the disc. The reservoir piston rod is a simple way to realise a reservoir piston with a damping chamber surface area being smaller than the recoil chamber surface area. Furthermore, the reservoir piston rod my be sealed in a reliable way to a lateral reservoir wall of the fluid reservoir using conventional shaft sealings to separate the damping chamber from the recoil chamber in a fluid-tight manner.

The damping chamber of the fluid reservoir preferably has a smaller diameter, in particular orthogonally to a longitudinal axis of the fluid reservoir, than the recoil chamber of the fluid reservoir. Due the pressure transmission by the reservoir piston, there is a higher pressure in the damping chamber than in the recoil chamber. By reducing the diameter of the damping chamber, the force acting on a lateral reservoir wall of the fluid reservoir delimiting the damping chamber is reduced leading to an increased mechanical stability of the fluid reservoir, in particular without the need for an increased thickness of the lateral reservoir wall.

A lateral reservoir wall of the fluid reservoir delimiting the damping chamber and the recoil chamber of the fluid reservoir preferably has the same wall thickness at the damping chamber and at the recoil chamber and/or preferably is made in one piece, preferably of aluminium. These embodiments of the fluid reservoir are very lightweight and may be produced very easily, for example by impact extrusion. For example, the lateral reservoir wall may be surrounding a longitudinal axis of the fluid reservoir and/or the lateral reservoir wall may be formed cylindrically at least in sections.

The fluid reservoir preferably comprises an adjustment means for adjusting a volume of the recoil chamber. For example, the adjustment means may comprise a screw extending through a wall of the fluid reservoir into the recoil chamber. By increasing the volume of the recoil chamber, the pressure of the recoil fluid may be decreased and vice versa. By adjusting the pressure of the recoil fluid, the elastic recoil force of the damping system may be adapted to evolving requirements during operation of the damping system. In particular, the volume of the recoil chamber may be adjusted to compensate a variation of the pressure of the recoil fluid due to a temperature variation of the recoil fluid.

The adjustment means preferably is designed for automatically increasing the volume of the recoil chamber with an increasing temperature of the recoil fluid to automatically compensate a variation of the pressure of the recoil fluid due to a temperature variation of the recoil fluid. To this aim, the adjustment means may comprise for example a compensation medium and a compensation piston as described in the documents DE 31 41 295 A1, EP 1 795 777 A2, WO 2021/233842 A1 or EP 3 967 898 A1.

A lateral reservoir wall of the fluid reservoir preferably comprises a low friction surface layer, for example a surface coating, a surface structure and/or an electrolytic oxidation layer, to reduce friction between the lateral reservoir wall and the reservoir piston of the fluid reservoir. For example, the lateral reservoir wall may be surrounding a longitudinal axis of the fluid reservoir and/or the lateral reservoir wall may be formed cylindrically at least in sections.

The at least one fluid damper comprises preferably a damper piston, wherein the damper piston partitions the damping volume of the at least one fluid damper into a back chamber and a front chamber. The partitioning preferably is designed in a fluid tight manner.

The damping chamber of the fluid reservoir preferably is connected to the front chamber in a fluid conducting manner. The damper piston preferably is movable in an insertion direction increasing a volume of the back chamber and decreasing a volume of the front chamber. The damper piston preferably is movable in an extraction direction decreasing the volume of the back chamber and increasing the volume of the front chamber.

The insertion direction and the extraction direction preferably are oriented opposing each other along a linear longitudinal axis of the at least one fluid damper, and the damper piston is linearly movable along the longitudinal axis. In alternative embodiments, the damper piston is movable by rotation around a rotational axis or by elastic deformation of the damper piston.

A damper piston rod preferably is attached to the damper piston and guided out of the at least one damper through the back chamber of the damping volume. The damper piston rod preferably is guided along a linear longitudinal axis of the at least one damper.

If the damping system is used to dampen a movement of a first component and a second component relative to each other, the damper piston, in particular the damper piston rod, may be attached to the first component, and a damper wall of the at least one damper delimiting the damping volume may be attached to the second component.

If the damper piston is moved from a resting position in the insertion direction, the fluid is pushed by the damper piston and/or the damper piston rod from the front chamber of the damping volume of the at least one damper to the back chamber of the damping volume and/or to the damping chamber of the fluid reservoir. Consequently, the damping fluid pushes the reservoir piston in the compression direction compressing the recoil fluid in the recoil chamber of the fluid reservoir. The pressure of the compressed recoil fluid pushes the reservoir piston back in the dilatation direction thereby pushing the damping fluid back in the damping volume of the at least one damper.

This way, the movement of the piston from the resting position in the insertion direction is reversed into a movement in the extraction direction by the recoil fluid in the fluid reservoir acting like a gas spring. In an analogous way, a movement of the piston from the resting position in the extraction direction is reversed into a movement in the insertion direction by the recoil fluid in the fluid reservoir.

The flow resistance of the damping fluid flowing from the front chamber to the back chamber and/or to the damping chamber and back dampens movements of the damper piston in the insertion direction and in the extraction direction.

The at least one fluid damper preferably comprises at least one overflow channel connecting the back chamber to the front chamber in a fluid conducting manner, wherein the at least one overflow channel preferably is arranged in the damper piston and/or in a lateral damper wall of the damping volume. The overflow channel may form at least part of the fluid conduit connecting the damping volume of the at least one fluid damper to the damping chamber of the fluid reservoir in a fluid-conducting manner.

Due to the overflow channel, the damping fluid may flow from the front chamber to the back chamber and vice versa in a controlled way. Therefore, leakages of the damping fluid between the damper piston and a damper wall surrounding the damping volume do not influence the behaviour of the damping system. Consequently, the damper piston may be designed without a sealing making the damping system particularly easy to manufacture and cheap.

In embodiments with an overflow channel, the amount of damping fluid displaced by a movement of the damper piston and attached damper piston rod is defined by the volume of the damper piston rod being inserted into the damping volume. Therefore, the damping force and the recoil force of the at least one damper may be easily adapted by replacing the damper piston rod by a damper piston rod having a different diameter.

The at least one fluid damper preferably comprises a first overflow channel allowing the damping fluid to flow only from the back chamber to the front chamber, and a second overflow channel allowing the damping fluid to flow only from the front chamber to the back chamber, wherein the first overflow channel preferably has a different flow resistance for the damping fluid than the second overflow channel.

Two overflow channels with differing flow resistances allow for defining different damping forces for movements of the damper piston in the insertion direction an in the extraction direction. This way, the damping characteristics of the damping system can be tailor-made for various applications.

In embodiments of the invention, the damping chamber of the fluid reservoir is connected to the back chamber and to the front chamber of the at least one fluid damper in a fluid conducting manner. This way, the damper piston of the at least one fluid damper may act as a double-acting piston allowing for a particularly compact design of the fluid damper.

The damping system preferably comprises at least one overflow valve for adjusting a flow of the damping fluid between the back chamber and the front chamber of the at least one fluid damper. The overflow valve preferably is arranged in an overflow channel connecting the back chamber to the front chamber in a fluid conducting manner. The overflow valve allows for adjusting the flow resistance for the damping fluid thereby adjusting the damping force of the damping system.

The damping system preferably comprises more than one overflow valve for defining more than one damping force of the damping system, for example depending on a direction and/or speed of a movement of the damper piston of the at least one damper.

The at least one overflow valve preferably is adjustable during operation of the damping system to adapt the damping force or damping forces of the damping system to evolving requirements.

The damping system comprises at least a first fluid damper and a second fluid damper, wherein the damping volumes of each of the first fluid damper and the second fluid damper are connected to the damping chamber of the fluid reservoir in a fluid-conducting manner. By connecting two or more fluid dampers to one single fluid reservoir, the damping system is particularly compact and lightweight. Moreover, the damping behaviour of the two or more fluid dampers may by synchronised in a simple way by connecting the fluid dampers to the same fluid reservoir.

The damping system preferably is arranged for damping movements of a component being displaceable from a resting position in a first direction and in a second direction, wherein the first fluid damper is arranged for damping a movement of the component, when the component is displaced from the resting position in the first direction, and wherein the second fluid damper is arranged for damping a movement of the component, when the component is displaced from the resting position in the second direction.

Preferably, only one of the first fluid damper and the second fluid damper dampens a movement of the component at any position off the resting position. If only one of the two fluid dampers is active at any position of the component off the resting position, the two dampers may share the same fluid reservoir in a particularly efficient manner.

The damper piston rod of the first fluid damper preferably is guided through a first hole in a first flange of the component, and the piston rod of the second fluid damper preferably is guided through a second hole in a second flange of the component. Each of the damper piston rods preferably comprises a stopper to inhibit the respective piston rod from passing through the respective hole when the stopper contacts the respective flange. This embodiment may lead to only one of the first fluid damper and the second fluid damper dampening a movement of the component at any position off the resting position in a particularly simple way.

For example, when the component is moved from the resting position in the first direction, the stopper of the first fluid damper may abut against the respective flange to cause the damper piston rod of the first lateral damper to be inserted into the first fluid damper to provide a damping effect, and the damper piston rod of the second fluid damper may slide freely through the hole in the respective flange without inserting the damper piston rod of the second fluid damper into the second fluid damper.

The first fluid damper and/or the second fluid damper preferably is preloaded, for example by a pressure of the recoil fluid in the recoil chamber of the fluid reservoir, for forcing the component into the resting position. This way, the component reliably returns into the resting position after each movement avoiding any problems that might arise from the component remaining in an undefined position off the resting position.

### Brief Description of Drawings

The following description and drawings of various embodiments of the present invention are presented for purposes of illustration but are not intended to be exhaustive or limited to the embodiments disclosed.
Figure 1 shows a schematic longitudinal section of the fluid reservoir of a damping system according to the invention.
Figure 2 shows a schematic view of a damping system according to the invention.
Figure 3 shows a schematic view of another damping system according to the invention.

### Fig.1

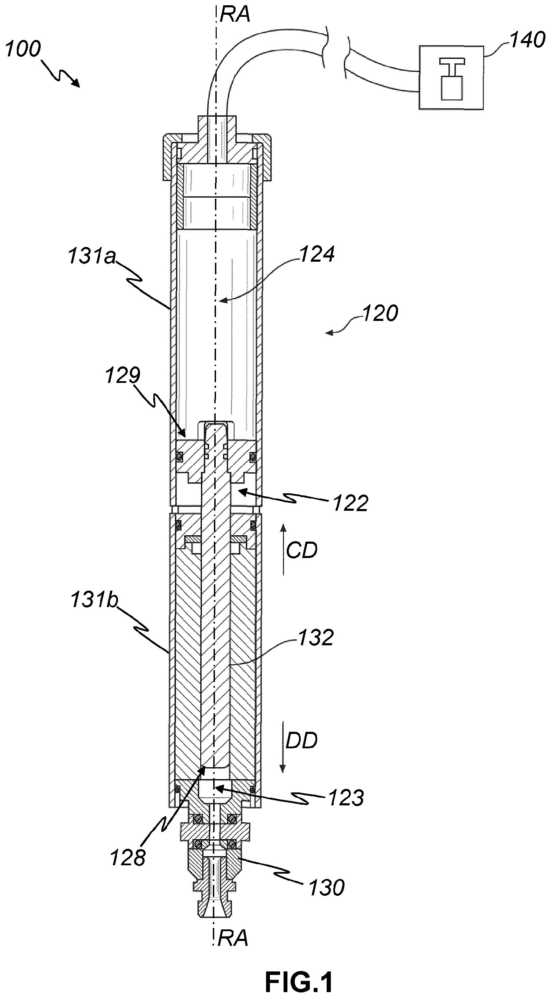

Figure 1 shows a schematic longitudinal section along the longitudinal axis RA of the fluid reservoir 120 of a damping system 100 according to the invention.

The fluid reservoir 120 comprises a reservoir piston 122 partitioning an inner volume of the fluid reservoir 120 into a damping chamber 123 containing a damping fluid, for example a hydraulic oil, and a recoil chamber 124 containing a recoil fluid, for example air. The reservoir piston 122 of the fluid reservoir 120 comprises a reservoir piston rod 132 extending into the damping chamber 123 of the fluid reservoir 120.

The reservoir piston 122 comprising the reservoir piston rod 132 is movable in a compression direction CD increasing a volume of the damping chamber 123 and decreasing a volume of the recoil chamber 124. Furthermore, the reservoir piston 122 is movable in a dilatation direction DD decreasing the volume of the damping chamber 123 and increasing the volume of the recoil chamber 124. For example, the compression direction CD and the dilatation direction are oriented opposing to each other along the longitudinal axis RA of the fluid reservoir 120.

The reservoir piston 122 comprising the reservoir piston rod 132 comprises a damping chamber surface 128 facing the damping chamber 123 and a recoil chamber surface 129 facing the recoil chamber 124, wherein a surface area of the damping chamber surface 128 preferably is smaller than a surface area of the recoil chamber surface 129.

The damping system 100 preferably comprises a fluid conduit 130 connecting the damping volume of the at least one fluid damper (not shown) of the damping system to the damping chamber 123 of the fluid reservoir 120 in a fluid-conducting manner.

The damping system 100 preferably comprises a pump 140 connected in a fluid conducting matter to the recoil chamber 124 of the fluid reservoir 120 for adjusting a pressure of the recoil fluid in the recoil chamber 124.

The damping chamber 123 of the fluid reservoir 120 preferably has a smaller diameter orthogonally to the longitudinal axis RA of the fluid reservoir 120 than the recoil chamber 124 of the fluid reservoir 120.

A lateral reservoir wall 131 of the fluid reservoir 120, for example a cylindrical wall surrounding the longitudinal axis RA of the fluid reservoir 120, delimiting the damping chamber 123 and the recoil chamber 124 of the fluid reservoir 120 may have a higher wall thickness at the damping chamber 123 than at the recoil chamber 124.

### Fig.2

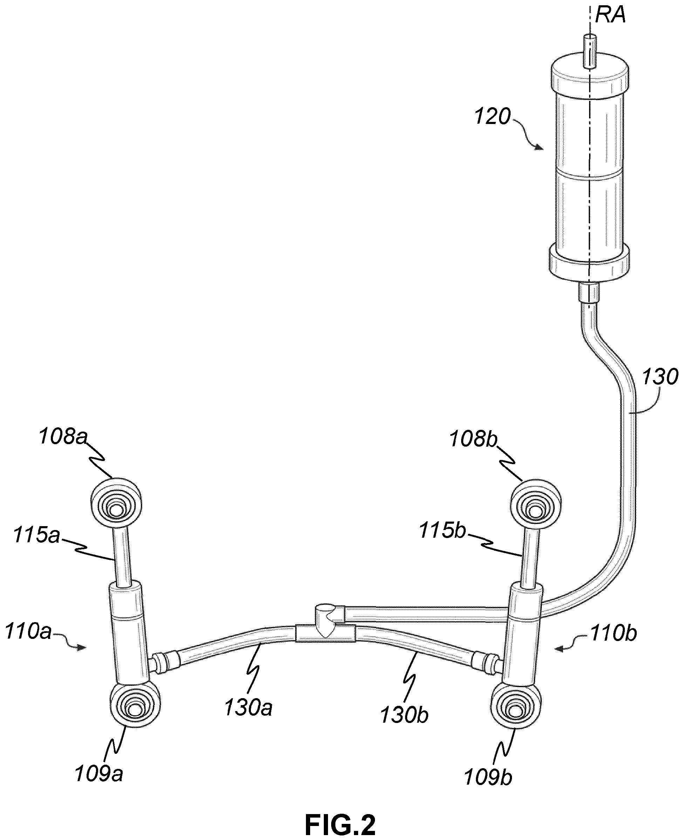

Figure 2 shows a schematic view of a damping system 100 according to the invention.

In addition to a fluid reservoir 120, which may be designed as shown in figure 1, the damping system 100 comprises a conduit 130, 130a, 130b, for example a branched hose, connecting the damping volumes of a first fluid damper 110a and of a second fluid damper 110b to the damping chamber of the fluid reservoir 120 in a fluid-conducting manner.

The fluid dampers 110a, 110b comprise each a damper piston rod 115a, 115b, attached to the respective damper piston (not shown) and guided out of the fluid dampers 110a, 110b. The fluid dampers 110a, 110b comprise each a damper fixation means 109a, 109b for fixation of the fluid dampers 110a, 110b to a first component (not shown). The damper piston rods 115a, 115b comprise each a rod fixation means 108a, 108b for fixation of the damper piston rods 115a, 115b to a second component (not shown). This way, the fluid dampers 110a, 110b may dampen a movement of the first component relative to the second component.

### Fig.3

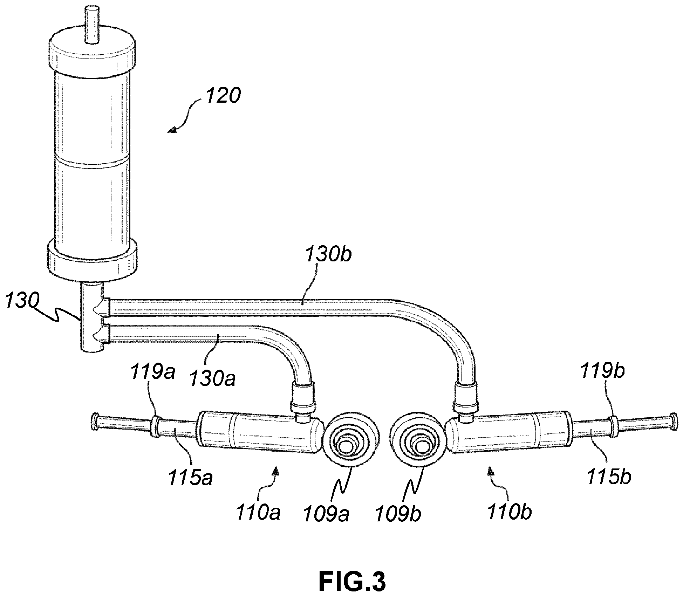

Figure 3 shows a schematic view of another damping system 100 according to the invention.

The damping system 100 shown in figure 3 differs from the one shown in figure 2 in that the damper piston rods 115a, 115b comprise each a stopper 119a 119b instead of the rod fixation means 108a, 108b. The stoppers 119a, 119b are designed to inhibit the respective piston rod 115a, 115b from passing through a hole in a flange of the second component when the stopper 119a, 119b contacts the respective flange.

**Reference Signs List**

| | | | |
|---|---|---|---|
| 100 | damping system | 128 | damper chamber surface |
| 108 | rod fixation means | 129 | recoil chamber surface |
| 109 | damper fixation means | 130 | fluid conduit |
| 110 | fluid damper | 131 | lateral reservoir wall |
| 115 | damper piston rod | 132 | reservoir piston rod |
| 119 | stopper | 140 | pump |
| 120 | fluid reservoir | | |
| 122 | reservoir piston | RA | longitudinal axis of the fluid reservoir |
| 123 | damping chamber | CD | compression direction |
| 124 | recoil chamber | DD | dilatation direction |

## Claims

1. A damping system (100) comprising
a. a first fluid damper (110a) and a second fluid damper (110b) each comprising a damping volume containing a damping fluid, and
b. one single fluid reservoir (120) comprising a reservoir piston (122) partitioning an inner volume of the one single fluid reservoir (120) into a damping chamber (123) containing the damping fluid and a recoil chamber (124) containing a recoil fluid, and
c. a fluid conduit (130) connecting the damping volumes of the first fluid damper (110a) and of the second fluid damper (110b) to the damping chamber (123) of the one single fluid reservoir (120) in a fluid-conducting manner,
d. wherein the reservoir piston (122) is movable in a compression direction (CD) increasing a volume of the damping chamber (123) and decreasing a volume of the recoil chamber (124),
e. wherein the reservoir piston (122) is movable in a dilatation direction (DD) decreasing the volume of the damping chamber (123) and increasing the volume of the recoil chamber (124),
f. wherein the reservoir piston (122) comprises a damping chamber surface (128) facing the damping chamber (123) and a recoil chamber surface (129) facing the recoil chamber (124),
g. wherein a surface area of the damping chamber surface (128) is smaller than a surface area of the recoil chamber surface (129).

2. The damping system (100) according to claim 1,
wherein the damping system (100) comprises a pump (140) connected in a fluid conducting matter to the recoil chamber (124) of the one single fluid reservoir (120) for adjusting a pressure of the recoil fluid in the recoil chamber (124).

3. The damping system (100) according to claim 1,
wherein the reservoir piston (122) of the one single fluid reservoir (120) comprises a reservoir piston rod (132) extending into the damping chamber (123) of the one single fluid reservoir (120).

4. The damping system (100) according to claim 1,
wherein the damping chamber (123) of the one single fluid reservoir (120) has a smaller diameter than the recoil chamber (124) of the one single fluid reservoir (120).

5. The damping system (100) according to claim 1,
wherein a lateral reservoir wall (131) of the one single fluid reservoir (120) delimiting the damping chamber (123) and the recoil chamber (124) of the one single fluid reservoir (120) has the same wall thickness at the damping chamber (123) and at the recoil chamber (124).

6. The damping system (100) according to claim 1,
wherein a lateral reservoir wall (131) of the one single fluid reservoir (120) delimiting the damping chamber (123) and the recoil chamber (124) of the one single fluid reservoir (120) is made in one piece.

7. The damping system (100) according to claim 1,
wherein the one single fluid reservoir (120) comprises an adjustment means for adjusting a volume of the recoil chamber (124).

8. The damping system (100) according to claim 1,
wherein a lateral reservoir wall (131) of the one single fluid reservoir (120) comprises a low friction surface layer to reduce friction between the lateral reservoir wall (131) and the reservoir piston (122) of the one single fluid reservoir (120).

9. The damping system (100) according to claim 1,
a. wherein the first fluid damper (110a) and the second fluid damper (110b) each comprise a damper piston,
b. wherein the damper piston partitions the damping volume of the respective fluid damper (110a, 110b) into a back chamber and a front chamber,
c. wherein the damping chamber (123) of the one single fluid reservoir (120) is connected to the front chamber in a fluid conducting manner,
d. wherein the damper piston is movable in an insertion direction (ID) increasing a volume of the back chamber and decreasing a volume of the front chamber, and
e. wherein the damper piston is movable in an extraction direction (ED) decreasing the volume of the back chamber and increasing the volume of the front chamber.

10. The damping system (100) according to claim 9,
wherein the first fluid damper (110a) and the second fluid damper (110b) each comprise at least one overflow channel connecting the back chamber to the front chamber in a fluid conducting manner.

11. The damping system (100) according to claim 10,
a. wherein the first fluid damper (110a) and the second fluid damper (110b) each comprise a first overflow channel (116a) allowing the damping fluid to flow only from the back chamber to the front chamber, and a second overflow channel (116b) allowing the damping fluid to flow only from the front chamber to the back chamber,
b. wherein the first overflow channel (116a) has a different flow resistance for the damping fluid than the second overflow channel (116b).

12. The damping system (100) according to claim 9,
wherein the damping chamber (123) of the one single fluid reservoir (120) is connected to the back chamber and to the front chamber of the first fluid damper (110a) and the second fluid damper (110b) in a fluid conducting manner.

13. The damping system (100) according to claim 9,
wherein the damping system (100) comprises at least one overflow valve for adjusting a flow of the damping fluid between the back chamber and the front chamber of the first fluid damper (110a) and the second fluid damper (110b).

14. The damping system (100) according to claim 9,
wherein the front chambers of each of the first fluid damper (110a) and the second fluid damper (110b) are connected to the damping chamber (123) of the one single fluid reservoir (120) in a fluid-conducting manner.

15. The damping system (100) according to claim 14,
a. wherein the damping system (100) is arranged for damping movements of a component being displaceable from a resting position in a first direction and in a second direction,
b. wherein the first fluid damper (110a) is arranged for damping a movement of the component, when the component is displaced from the resting position in the first direction, and
c. wherein the second fluid damper (110b) is arranged for damping a movement of the component, when the component is displaced from the resting position in the second direction.

## Patentansprüche

1. Dämpfungssystem (100) umfassend
a. einen ersten Fluiddämpfer (110a) und einen zweiten Fluiddämpfer (110b), die jeweils ein Dämpfungsvolumen aufweisen, das ein Dämpfungsfluid enthält, und
b. genau ein Fluidreservoir (120) mit einem Reservoirkolben (122), der ein Innenvolumen des genau einen Fluidreservoirs (120) in eine Dämpfungskammer (123), die das Dämpfungsfluid enthält, und eine Rückstellkammer (124), die ein Rückstellfluid enthält, unterteilt, und
c. eine Fluidleitung (130), die die Dämpfungsvolumina des ersten Fluiddämpfers (110a) und des zweiten Fluiddämpfers (110b) mit der Dämpfungskammer (123) des genau einen Fluidreservoirs (120) fluidleitend verbindet,
d. wobei der Reservoirkolben (122) in einer Kompressionsrichtung (CD) beweglich ist, wodurch das Volumen der Dämpfungskammer (123) vergrößert und das Volumen der Rückstellkammer (124) verkleinert wird,
e. wobei der Reservoirkolben (122) in einer Ausdehnungsrichtung (DD) beweglich ist, wodurch sich das Volumen der Dämpfungskammer (123) verringert und das Volumen der Rückstellkammer (124) vergrößert ,
f. wobei der Reservoirkolben (122) eine der Dämpfungskammer (123) zugewandte Dämpfungskammerfläche (128) und eine der Rückstellkammer (124) zugewandte Rückstellkammerfläche (129) aufweist,
g. wobei ein Flächeninhalt der Dämpfungskammerfläche (128) kleiner ist als ein Flächeninhalt der Rückstellkammerfläche (129).

2. Dämpfungssystem (100) nach Anspruch 1,
wobei das Dämpfungssystem (100) eine Pumpe (140) umfasst, die fluidleitend mit der Rückstellkammer (124) des genau einen Fluidreservoirs (120) verbunden ist, um einen Druck des Rückstellfluids in der Rückstellkammer (124) einzustellen.

3. Dämpfungssystem (100) nach Anspruch 1,
wobei der Reservoirkolben (122) des genau einen Fluidreservoirs (120) eine Reservoirkolbenstange (132) umfasst, die sich in die Dämpfungskammer (123) des genau einen Fluidreservoirs (120) erstreckt.

4. Dämpfungssystem (100) nach Anspruch 1,
wobei die Dämpfungskammer (123) des genau einen Fluidreservoirs (120) einen kleineren Durchmesser hat als die Rückstellkammer (124) des genau einen Fluidreservoirs (120).

5. Dämpfungssystem (100) nach Anspruch 1,
wobei eine seitliche Reservoirwand (131) des genau einen Fluidreservoirs (120), die die Dämpfungskammer (123) und die Rückstellkammer (124) des genau einen Fluidreservoirs (120) begrenzt, an der Dämpfungskammer (123) und an der Rückstellkammer (124) die gleiche Wandstärke aufweist.

6. Dämpfungssystem (100) nach Anspruch 1,
wobei eine seitliche Reservoirwand (131) des genau einen Fluidreservoirs (120), die die Dämpfungskammer (123) und die Rückstellkammer (124) des genau einen Fluidreservoirs (120) begrenzt, einstückig ist.

7. Dämpfungssystem (100) nach Anspruch 1,
wobei das genau eine Fluidreservoir (120) ein Einstellmittel zum Einstellen eines Volumens der Rückstellkammer (124) umfasst.

8. Dämpfungssystem (100) nach Anspruch 1,
wobei eine seitliche Reservoirwand (131) des genau einen Fluidreservoirs (120) eine Oberflächenschicht mit geringer Reibung umfasst, um die Reibung zwischen der seitlichen Reservoirwand (131) und dem Reservoirkolben (122) des genau einen Fluidreservoirs (120) zu verringern.

9. Dämpfungssystem (100) nach Anspruch 1,
a. wobei der erste Fluiddämpfer (110a) und der zweite Fluiddämpfer (110b) jeweils einen Dämpferkolben umfassen,
b. wobei der Dämpferkolben das Dämpfungsvolumen des jeweiligen Fluiddämpfers (110a, 110b) in eine hintere Kammer und eine vordere Kammer unterteilt,
c. wobei die Dämpfungskammer (123) des genau einen Fluidreservoirs (120) mit der vorderen Kammer flüssigkeitsleitend verbunden ist,
d. wobei der Dämpferkolben in einer Einschubrichtung (ID) beweglich ist, wodurch das Volumen der hinteren Kammer vergrößert und das Volumen der vorderen Kammer verkleinert wird, und
e. wobei der Dämpferkolben in einer Auszugsrichtung (ED) beweglich ist, wodurch das Volumen der hinteren Kammer verringert und das Volumen der vorderen Kammer vergrößert wird.

10. Dämpfungssystem (100) nach Anspruch 9,
wobei der erste Fluiddämpfer (110a) und der zweite Fluiddämpfer (110b) jeweils mindestens einen Überströmkanal aufweisen, der die hintere Kammer mit der vorderen Kammer fluidleitend verbindet.

11. Dämpfungssystem (100) nach Anspruch 10,
a. wobei der erste Fluiddämpfer (110a) und der zweite Fluiddämpfer (110b)jeweils einen ersten Überströmkanal (116a), der es dem Dämpfungsfluid ermöglicht, nur von der hinteren Kammer zu der vorderen Kammer zu fließen, und einen zweiten Überströmkanal (116b), der es dem Dämpfungsfluid ermöglicht, nur von der vorderen Kammer zu der hinteren Kammer zu fließen, umfassen,
b. wobei der erste Überströmkanal (116a) einen anderen Strömungswiderstand für das Dämpfungsfluid aufweist als der zweite Überströmkanal (116b).

12. Dämpfungssystem (100) nach Anspruch 9,
wobei die Dämpfungskammer (123) des genau einen Fluidreservoirs (120) mit der hinteren Kammer und mit der vorderen Kammer des ersten Fluiddämpfers (110a) und des zweiten Fluiddämpfers (110b) fluidleitend verbunden ist.

13. Dämpfungssystem (100) nach Anspruch 9,
wobei das Dämpfungssystem (100) mindestens ein Überströmventil zur Einstellung eines Flusses des Dämpfungsfluids zwischen der hinteren Kammer und der vorderen Kammer des ersten Fluiddämpfers (110a) und des zweiten Fluiddämpfers (110b) umfasst.

14. Dämpfungssystem (100) nach Anspruch 9,
wobei die vorderen Kammern des ersten Fluiddämpfers (110a) und des zweiten Fluiddämpfers (110b) jeweils mit der Dämpfungskammer (123) des genau einen Fluidreservoirs (120) fluidleitend verbunden sind.

15. Dämpfungssystem (100) nach Anspruch 14,
a. wobei das Dämpfungssystem (100) zum Dämpfen von Bewegungen eines aus einer Ruheposition in eine erste Richtung und in eine zweite Richtung verschiebbaren Bauteils eingerichtet ist,
b. wobei der erste Fluiddämpfer (110a) zum Dämpfen einer Bewegung des Bauteils eingerichtet ist, wenn das Bauteil aus der Ruheposition in der ersten Richtung verschoben wird, und
c. wobei der zweite Fluiddämpfer (110b) zum Dämpfen einer Bewegung des Bauteils eingerichtet ist, wenn das Bauteil aus der Ruhestellung in die zweite Richtung verschoben wird.

## Revendications

1. Système d'amortissement (100) comprenant
a. un premier amortisseur à fluide (110a) et un second amortisseur à fluide (110b) comprenant chacun un volume d'amortissement contenant un fluide d'amortissement, et
b. un seul réservoir à fluide (120) comprenant un piston de réservoir (122) divisant un volume intérieur du seul réservoir à fluide (120) en une chambre d'amortissement (123) contenant le fluide d'amortissement et une chambre de recul (124) contenant un fluide de recul, et
c. un conduit à fluide (130) reliant de manière conductrice à fluide les volumes d'amortissement du premier amortisseur à fluide (110a) et du second amortisseur à fluide (110b) à la chambre d'amortissement (123) du seul réservoir à fluide (120),
d. le piston de réservoir (122) étant mobile dans une direction de compression (CD) augmentant le volume de la chambre d'amortissement (123) et diminuant le volume de la chambre de recul (124),
e. le piston du réservoir (122) étant mobile dans une direction de dilatation (DD) diminuant le volume de la chambre d'amortissement (123) et augmentant le volume de la chambre de recul (124),
f. le piston réservoir (122) comprenant une surface de chambre d'amortissement (128) faisant face à la chambre d'amortissement (123) et une surface de chambre de recul (129) faisant face à la chambre de recul (124),
g. une aire de la surface de chambre d'amortissement (128) étant plus petite qu'une aire de la surface de chambre de recul (129).

2. Système d'amortissement (100) selon la revendication 1,
le système d'amortissement (100) comprenant une pompe (140) reliée de manière conductrice à fluide à la chambre de recul (124) du seul réservoir à fluide (120) pour ajuster la pression du fluide de recul dans la chambre de recul (124).

3. Système d'amortissement (100) selon la revendication 1,
le piston de réservoir (122) du seul réservoir à fluide (120) comprenant une tige de piston de réservoir (132) s'étendant dans la chambre d'amortissement (123) du seul réservoir à fluide (120).

4. Système d'amortissement (100) selon la revendication 1,
la chambre d'amortissement (123) du seul réservoir à fluide (120) ayant un diamètre plus petit que la chambre de recul (124) du seul réservoir à fluide (120).

5. Système d'amortissement (100) selon la revendication 1,
une paroi latérale de réservoir (131) du seul réservoir à fluide (120) délimitant la chambre d'amortissement (123) et la chambre de recul (124) du seul réservoir à fluide (120) ayant la même épaisseur de paroi au niveau de la chambre d'amortissement (123) et de la chambre de recul (124).

6. Système d'amortissement (100) selon la revendication 1,
une paroi latérale de réservoir (131) du seul réservoir à fluide (120) délimitant la chambre d'amortissement (123) et la chambre de recul (124) du seul réservoir à fluide (120) étant fabriquée d'une seule pièce.

7. Système d'amortissement (100) selon la revendication 1,
le seul réservoir à fluide (120) comprenant un moyen d'ajustement pour ajuster le volume de la chambre de recul (124).

8. Système d'amortissement (100) selon la revendication 1,
une paroi latérale de réservoir (131) du seul réservoir à fluide (120) comprenant une couche de surface à faible friction pour réduire la friction entre la paroi latérale de réservoir (131) et le piston de réservoir (122) du seul réservoir à fluide (120).

9. Système d'amortissement (100) selon la revendication 1,
a. le premier amortisseur à fluide (110a) et le second amortisseur à fluide (110b) comprenant chacun un piston d'amortisseur,
b. le piston d'amortisseur divisant le volume d'amortissement de l'amortisseur à fluide respectif (110a, 110b) en une chambre arrière et une chambre avant,
c. la chambre d'amortissement (123) du seul réservoir à fluide (120) étant reliée à la chambre avant de manière conductrice de fluide,
d. le piston d'amortisseur étant mobile dans une direction d'insertion (ID) augmentant le volume de la chambre arrière et diminuant le volume de la chambre avant, et
e. le piston d'amortisseur étant mobile dans une direction d'extraction (ED) diminuant le volume de la chambre arrière et augmentant le volume de la chambre avant.

10. Système d'amortissement (100) selon la revendication 9,
le premier amortisseur à fluide (110a) et le second amortisseur à fluide (110b) comprenant chacun au moins un canal de décharge reliant la chambre arrière à la chambre avant de manière conductrice de fluide.

11. Système d'amortissement (100) selon la revendication 10,
a. le premier amortisseur à fluide (110a) et le second amortisseur à fluide (110b) comprenant chacun un premier canal de décharge (116a) permettant au fluide d'amortissement de s'écouler uniquement de la chambre arrière vers la chambre avant, et un second canal de décharge (116b) permettant au fluide d'amortissement de s'écouler uniquement de la chambre avant vers la chambre arrière,
b. le premier canal de décharge (116a) ayant une résistance à l'écoulement du fluide d'amortissement différente de celle du second canal de décharge (116b).

12. Système d'amortissement (100) selon la revendication 9,
la chambre d'amortissement (123) du seul réservoir à fluide (120) étant reliée à la chambre arrière et à la chambre avant du premier amortisseur à fluide (110a) et du second amortisseur à fluide (110b) de manière conductrice de fluide.

13. Système d'amortissement (100) selon la revendication 9,
le système d'amortissement (100) comprenant au moins une valve de décharge pour ajuster un flux du fluide d'amortissement entre la chambre arrière et la chambre avant du premier amortisseur à fluide (110a) et du second amortisseur à fluide (110b).

14. Système d'amortissement (100) selon la revendication 9,
les chambres avant du premier amortisseur à fluide (110a) et du second amortisseur à fluide (110b) étant reliées à la chambre d'amortissement (123) du seul réservoir à fluide (120) de manière conductrice de fluide.

15. Système d'amortissement (100) selon la revendication 14,
a. le système d'amortissement (100) étant conçu pour amortir les mouvements d'un composant pouvant être déplacé d'une position de repos dans une première direction et dans une seconde direction,
b. le premier amortisseur à fluide (110a) étant conçu pour amortir un mouvement du composant, lorsque le composant est déplacé de la position de repos dans la première direction, et
c. le second amortisseur à fluide (110b) étant conçu pour amortir un mouvement du composant, lorsque le composant est déplacé de la position de repos dans la seconde direction.
